# EUROPÄISCHE PATENTSCHRIFT

(11) **EP 3 529 511 B1**
(45) Veröffentlichungstag und Bekanntmachung des Hinweises auf die Patenterteilung: **05.05.2021**
(21) Anmeldenummer: 17768793.6
(22) Anmeldetag: 19.09.2017
(51) Int. Cl.: F16D 11/14, F16D 13/40, F16D 27/12

(54) **KUPPLUNGSANORDNUNG FÜR EIN HYBRIDFAHRZEUG**
COUPLING ASSEMBLY FOR A HYBRID VEHICLE
ENSEMBLE EMBRAYAGE POUR VÉHICULE HYBRIDE

(30) Priorität: 21.10.2016 DE 102016220712
(43) Veröffentlichungstag der Anmeldung: 28.08.2019
(73) Patentinhaber: ZF Friedrichshafen AG, 88046 Friedrichshafen (DE)
(72) Erfinder: VIERNEKES, Gerald, 97437 Hassfurt (DE); LUDSTECK, Sven, 97702 Münnerstadt (DE); DEPPERT, Reinhard, 97469 Gochsheim (DE)
(74) Vertreter: ZF Friedrichshafen AG
(86) Internationale Anmeldenummer: PCT/EP2017/073559
(87) Internationale Veröffentlichungsnummer: WO 2018/072946

(56) Entgegenhaltungen:
- WO-A1-86/02981
- WO-A1-2007/072539
- DE-A1-102009 047 766
- JP-A- H04 287 719

## Beschreibung

Die vorliegende Erfindung bezieht sich auf eine Kupplungsanordnung für ein Hybridfahrzeug gemäß dem Oberbegriff von Patentanspruch 1.

Eine Kupplungsanordnung mit einer Formschlusskupplung und einer dazu funktional parallel angeordneten Reibungskupplung geht bereits aus der DE 10 2015 201 931 A1 hervor und ist dort zwischen einem Verbrennungsmotor und einer elektrischen Maschine angeordnet, um beispielsweise den Verbrennungsmotor bei elektrischem Fahrbetrieb mittels der Reibungskupplung an die elektrische Maschine anzukoppeln und diese zu starten. Sobald eine Synchronisation von Kurbelwelle und Rotorwelle vorliegt, kann die Formschlusskupplung geschlossen werden, um darüber das Antriebsmoment des Verbrennungsmotors an die Fahrzeugräder zu leiten. Zur Betätigung von Formschlusskupplung und Reibungskupplung ist ein gemeinsames Betätigungsmittel in Form eines hydraulischen oder elektromotorischen Aktors vorgesehen, wobei bei dessen Aktivierung eine stufenweise Kupplungsbetätigung erfolgt und zuerst die Elemente der Reibeinheit und danach bei erfolgter Synchronisierung der beteiligten Wellen die Elemente der Formschlusseinheit miteinander in Eingriff gebracht werden.

Infolge der stufenweisen wegabhängigen Betätigung kann es bei dieser Anordnung zu einem unerwünschten vorzeitigen Schließen der Formschlusskupplung kommen und zwar bevor die Reibungskupplung vollständig geschlossen ist, was den Fahrkomfort ungünstig beeinflussen kann.

Die WO86/02981 A1 offenbart eine Kupplungsanordnung der eingangs genannten Art, welche dort als eine elektromagnetisch betätigte Sperrkupplung für ein Kraftfahrzeug-Differentialgetriebe ausgebildet ist. Die Kupplungsanordnung umfasst eine Formschlusskupplung und eine dazu funktional parallel angeordnete Reibungskupplung, wobei jeder dieser Kupplungen eigene Betätigungsmittel zugeordnet sind und wodurch die Kupplungen voneinander unabhängig betätigbar sind.

Weitere derartige Kupplungsanordnungen sind mit der DE 10 2009 047 766 A1, der WO 2007/072539 A1 und der JP H04 287719 A bekannt geworden.

Der vorliegenden Erfindung liegt von dem genannten Stand der Technik die Aufgabe zugrunde, eine gattungsgemäße Kupplungsanordnung darzustellen, welche bauraumsparend in einen Antriebsstrang eines Hybridfahrzeugs integrierbar ist..

Diese Aufgabe wird durch eine Kupplungsanordnung mit den Merkmalen des Patentanspruchs 1 gelöst.

Vorteilhafte Ausgestaltungen und Weiterbildungen der Erfindung sind den abhängigen Ansprüchen sowie der nachfolgenden Figurenbeschreibung entnehmbar.

Es wird demnach eine Kupplungsanordnung für ein Hybridfahrzeug vorgeschlagen, welche eine Eingangswelle und eine dazu koaxial angeordnete Ausgangswelle und weiter eine Reibungskupplung und eine Formschlusskupplung umfasst, welche funktional parallel zwischen der Eingangswelle und der Ausgangswelle angeordnet sind. Dabei weist die Reibungskupplung eine Reibeinheit und die Formschlusskupplung eine Formschlusseinheit mit jeweils eigenen und unabhängig voneinander betätigbaren Betätigungsmitteln auf.

Gemäß der Erfindung zeichnet sich die Kupplungsanordnung dadurch aus, dass bei dieser Kupplungsanordnung eine elektrische Maschine mit einem Rotor und mit einem Stator vorgesehen ist, wobei der Rotor mit der Ausgangswelle in Drehmitnahmeverbindung steht und wobei die elektrische Maschine einen zentralen Aufnahmeraum aufweist, in welchem die Reibungskupplung und die Formschlusskupplung vollständig oder zumindest teilweise aufgenommen sind.

Die vorgeschlagene Ausgestaltung der Kupplungsanordnung ist insbesondere axial äußerst bauraumsparend. Es ist zudem vorteilhaft, dass bei einem beabsichtigten Eingriff der Formschlusskupplung die Reibungskupplung dennoch mit deren eigenen Betätigungsmitteln unabhängig von einer aktuellen Stellung der Formschlusskupplung ansteuerbar bleibt und somit ein weicherer Übergang beim Schließen der Formschlusskupplung erzielt werden kann. Die vorgeschlagene Kupplungsanordnung kann, wie dieses bereits aus der DE 10 2015 201 931 A1 bekannt ist, zwischen einem Verbrennungsmotor und einer elektrischen Maschine eines Hybridfahrzeuges angeordnet sein und auch die vorstehend erläuterte Funktionalität aufweisen. Der Fahrkomfort des Hybridfahrzeugs kann dadurch spürbar verbessert werden.

Sowohl die Reibungskupplung als auch die Formschlusskupplung können jeweils als normal-offen oder als normal-geschlossen Typ ausgeführt werden.

Gemäß einer vorteilhaften Ausgestaltung der Kupplungsanordnung können zumindest eines der Betätigungsmittel oder beide Betätigungsmittel zur elektromagnetischen Betätigung einer der Kupplungen ausgebildet sein. Ein jeweils zu diesem Zweck vorgesehener Elektromagnet kann mir Vorteil als ein konzentrisch zu der Eingangs- bzw. Ausgangswelle ausgebildeter Ringmagnet ausgebildet sein, der mit einem axial verlagerbaren Magnetanker und mit einem verlagerbaren Kupplungselement von Reibungskupplung bzw. Formschlusskupplung zusammenwirkt, wie dieses nachstehend erläutert wird.

Mit Vorteil kann die Reibeinheit eine axial verlagerbare Anpressplatte, eine Widerlageranordnung mit einer Gegenanpressplatte und eine zwischen diesen angeordnete Reibscheibe aufweisen, wobei die Anpressplatte und die Gegenanpressplatte mit der Eingangswelle oder der Ausgangswelle und wobei die Reibscheibe mit der jeweils anderen von Eingangswelle und Ausgangswelle in Drehmitnahmeverbindung steht.

Die Formschlusseinheit kann mit Vorteil ein verlagerbares erstes Element mit einem ersten Formschlussprofil und ein dazu feststehendes zweites Element mit einem zweiten Formschlussprofil aufweisen, wobei das erste Element mit der Eingangswelle oder der Ausgangswelle und das zweite Element mit der jeweils anderen von Eingangswelle und Ausgangswelle in Drehmitnahmeverbindung steht und wobei die Formschlussprofile durch das zugeordnete Betätigungsmittel bei einer Betätigung zur gemeinsamen Drehmitnahme gegenseitig in Eingriff bringbar sind (normal-offen Typ) oder welche durch das zugeordnete Betätigungsmittel bei einer Betätigung zur Aufhebung einer gegenseitigen Drehmitnahme gegenseitig außer Eingriff bringbar sind (normal-geschlossen Typ).

Eine insbesondere axial bauraumsparende Anordnung kann erzielt werden, indem die Formschlusskupplung und die Reibungskupplung radial gestaffelt zueinander angeordnet werden und sich gegenseitig zumindest teilweise axial überlappen.

In weiterer vorteilhafter Hinsicht können dabei die Reibeinheit und die Formschlusseinheit radial gestaffelt zueinander angeordnet sein und sich zumindest teilweise axial überlappen, wobei insbesondere die Formschlusseinheit radial innerhalb der Reibeinheit angeordnet ist.

Mit noch weiterem Vorteil können ebenso die beiden Betätigungsmittel von Reibungskupplung und Formschlusskupplung radial gestaffelt zueinander angeordnet sein und sich zumindest teilweise axial überlappen, wobei insbesondere das Betätigungsmittel der Formschlusskupplung radial innerhalb des Betätigungsmittels der Reibeinheit angeordnet ist.

Weiter kann mit Vorteil die Widerlageranordnung der Reibungskupplung am Rotor ausgebildet sein. Mit anderen Worten kann die elektrische Maschine einen Teil der Reibungskupplung ausbilden.

Mit noch weiterem Vorteil kann der Stator einen Statorträger mit einem den Aufnahmeraum begrenzenden Radialwandbereich umfassen oder benachbart zu einem Radialwandbereich einer weiteren Komponente angeordnet sein, an welchem die Betätigungsmittel der Reibungskupplung und der Formschlusskupplung festgelegt werden können.

Eine räumlich gegenüber weiteren Antriebsstrangkomponenten abgegrenzte Kupplungsanordnung kann erzielt werden, indem der Rotor einen sich radial erstreckenden Rotorträger aufweist, wobei der Aufnahmeraum von Reibungskupplung und Formschlusskupplung und von deren Betätigungseinheiten axial zwischen dem besagten Radialwandbereich und dem Rotorträger ausgebildet ist.

Sofern beide Kupplungen der Anordnung gleichartige Betätigungsmittel, insbesondere zur elektromagnetischen Betätigung aufweisen, können die Reibungskupplung und die Formschlusskupplung eine gemeinsame, insbesondere elektronische Ansteuereinheit zur Ansteuerung der Betätigungsmittel aufweisen.

Mit Bauraumvorteil kann solch eine Ansteuereinheit an dem Radialwandbereich und insbesondere innerhalb des Aufnahmeraums angeordnet sein.

Gemäß einem vorteilhaften Lagerungskonzept der Kupplungsanordnung kann vorgesehen sein, die Eingangswelle an dem Radialwandbereich und die Ausgangswelle zweifach zur Eingangswelle zu lagern. Im Weiteren kann die Ausgangswelle an einem Eingangsbereich einer im Drehmomentfluss nachfolgenden Komponente eines vorliegenden Antriebstrangs gelagert sein. Beispielsweise kann die Ausgangswelle zumindest mittelbar mit einer Eingangswelle eines Gangwechselgetriebes verbunden und durch diese gelagert sein.

Für eine bauliche Integration einer elektrischen Maschine in die Kupplungsanordnung kann vorteilhaft die elektrische Maschine ist als Innenläufer ausgebildet sein, wobei der Rotor radial innerhalb des Stators angeordnet ist. Dabei kann die Außenumfangsfläche des Rotors in bekannter Weise über einen radialen Luftspalt mit dem Stator zusammenwirken und die Innenumfangsfläche des Rotors kann die Widerlageranordnung der Reibungskupplung tragen oder ausbilden.

Insgesamt kann die Kupplungsanordnung als ein räumlich kompaktes und separates Modul zum Einbau in einen Fahrzeugantriebsstrang ausgebildet sein, wobei sich deren einzelne Elemente gegenseitig abstützen und eine feste Lagezuordnung aufweisen.

Es zeigen:
- Fig. 1: eine Schnittdarstellung einer Kupplungsanordnung mit einer normal-offenen Reibungskupplung, einer normal-geschlossenen Formschlusskupplung und einer elektrischen Maschine;
- Fig. 2: eine Schnittdarstellung einer Kupplungsanordnung mit einer normal-geschlossenen Reibungskupplung, einer normal-geschlossen Formschlusskupplung und einer elektrischen Maschine;
- Fig. 3: eine Schnittdarstellung einer Kupplungsanordnung mit einer normal-geschlossenen Reibungskupplung, einer normal-offenen Formschlusskupplung und einer elektrischen Maschine;
- Fig.: 4 eine Schnittdarstellung einer Kupplungsanordnung mit einer normal-offenen Reibungskupplung, einer normal-offenen Formschlusskupplung und einer elektrischen Maschine.

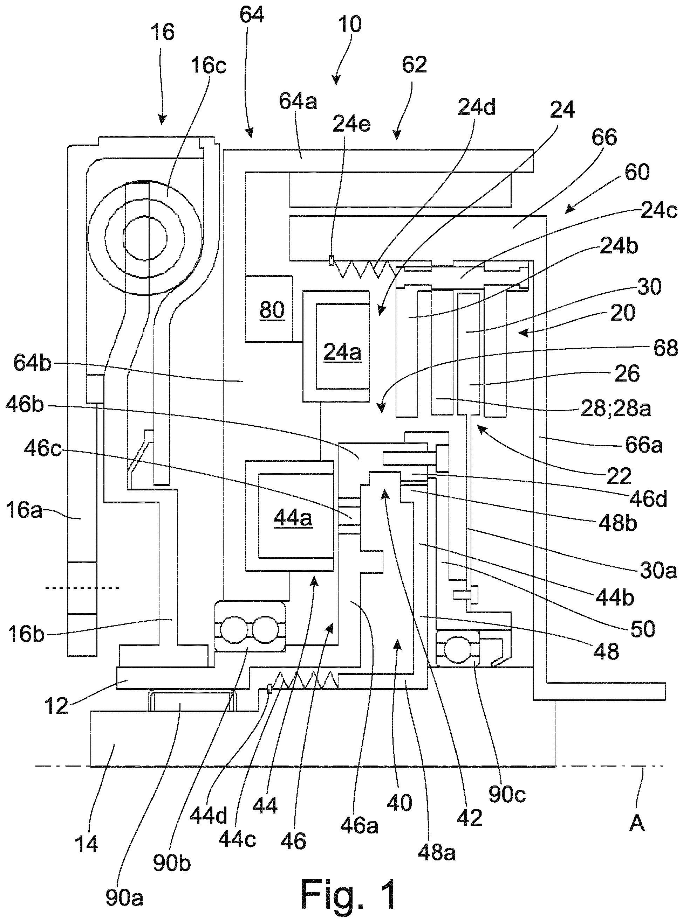

Fig. 1 zeigt eine Kupplungsanordnung 10 für ein Hybridfahrzeug, welche zunächst eine Eingangswelle 12 und eine dazu koaxial angeordnete Ausgangswelle 14 und eine Reibungskupplung 20 und eine Formschlusskupplung 40 umfasst, welche funktional parallel zwischen der Eingangswelle 12 und der Ausgangswelle 14 angeordnet sind. Der Kupplungsanordnung 10 ist vorliegend ein Torsionsdämpfer 16 in Form eines Zweimassenschwungrades vorgeschaltet, welches mit einer Eingangsseite 16a zur Verbindung mit der Kurbelwelle eines Verbrennungsmotors vorgesehen ist. Die Eingangsseite 16a ist unter Zwischenschaltung von mehreren als Schraubendruckfedern ausgeführten Energiespeichern 16c mit einer Ausgangsseite 16b verbunden, welche im Weiteren mittels einer Steckverzahnung mit der Eingangswelle 12 in Drehmitnahme steht.

Die Kupplungsanordnung 10 umfasst weiter eine elektrische Maschine 60 mit einem Stator 62 und mit einem Rotor 66, welcher mit der Ausgangswelle 14 in Drehmitnahmeverbindung steht. Innerhalb der elektrischen Maschine 60 ist ein zentraler Aufnahmeraum 68 vorgesehen, in welchem die Reibungskupplung 20 und die Formschlusskupplung 40 vollständig aufgenommen sind. Die elektrische Maschine 60 ist hier als Innenläufer ausgebildet, wobei der Rotor 66 radial innerhalb des Stators 62 angeordnet und drehbar um eine Achse A ist und wobei der Aufnahmeraum 68 zur Aufnahme der Kupplungen 40, 60 im Wesentlichen innerhalb des Rotors 66 vorliegt.

Der Stator 62 umfasst einen Statorträger 64 mit einem sich axial erstreckenden Zylinderwandbereich 64a zur Anordnung einer elektromagnetischen Statorkomponente und weiter einen den Aufnahmeraum 68 einseitig begrenzenden Radialwandbereich 64b. Eine Drehmomentabstützung des Statorträgers 64 kann beispielsweise an einem hier nicht zeichnerisch nicht dargestellten Getriebegehäuse oder einer anderen zu den Wellen 12, 14 und dem Rotor 66 drehentkoppelten Komponente erfolgen.

Der Rotor 66 weist einen sich radial erstreckenden Rotorträger 66a auf, wobei wie in den Fig. 1-4 erkennbar der Aufnahmeraum 68 axial zwischen dem Radialwandbereich 64b und dem Rotorträger 68a ausgebildet und axial beidseitig abgeschlossen ist.

Die Reibungskupplung 20 weist eine Reibeinheit 22 und die Formschlusskupplung 40 eine Formschlusseinheit 42 auf, welche jeweils zugeordnete eigene Betätigungsmittel 24, 44 aufweisen und dadurch unabhängig voneinander betätigbar sind. In den vorliegenden Ausführungsbeispielen sind die Betätigungsmittel 24, 44 gemeinsam am Radialwandbereich 64b des Statorträgers 46 festgelegt und dort beispielsweise in dafür geschaffene Aufnahmebereiche eingesetzt.

Die Reibungskupplung 20 ist in dem mit Fig. 1 erläuterten Ausführungsbeispiel vom normal-offen Typ und die Formschlusskupplung 40 vom normal-geschlossen Typ.

Vorliegend sind beide Betätigungsmittel 24, 44 zur elektromagnetischen Betätigung der beiden Kupplungen 20, 40 ausgebildet und umfassen dazu Elektromagnete 24a, 44a, deren Magnetfelder bei einer Strombeaufschlagung im Wesentlichen in axialer Richtung aus U-förmig ausgeführten Gehäuseschalen austreten können.

Die Reibeinheit 22 der trockenlaufenden Reibungskupplung 20 umfasst eine axial verlagerbare Anpressplatte 26, eine Widerlageranordnung 28 mit einer ringscheibenförmigen Gegenanpressplatte 28a und eine zwischen diesen angeordnete Reibscheibe 30, welche über einen Trägerbereich 30a radial innen drehfest an einem Übertragungselement 50 angeordnet ist und dort gegebenenfalls in einem gewissen Masse axial verlagerbar geführt sein kann. Die Anpressplatte 26 und die Gegenanpressplatte 28a stehen mit der Ausgangswelle 14 und die Reibscheibe 30 mit der Eingangswelle 12 in Drehmitnahmeverbindung. Die Widerlageranordnung 28 mit der Gegenanpressplatte 28a der Reibungskupplung 20 ist an einem sich axial erstreckenden Abschnitt am und drehfest zum Rotor 66 ausgebildet. Zur Ermöglichung eines Reibschlusses ist die Anpressplatte 26 einerseits innerhalb des Rotors 66 axial verlagerbar eingesetzt und andererseits mittels mehrerer am Umfang verteilter und axial abstehender Zugbolzen 24c, welche durch entsprechende Ausnehmungen der Gegenanpressplatte 28a geführt sind mit einem gleichfalls ringscheibenförmigen Magnetanker 24b fest verbunden. Dadurch kann bei einer Aktivierung des Elektromagneten 24a eine Zugkraft auf die Reibscheibe 30 übertragen werden, so dass diese reibschlüssig zwischen der Anpressplatte 26 und der Gegenanpressplatte 28a zum Schließen der Reibungskupplung 20 eingeklemmt werden kann. Zur Ermöglichung einer Rückstellbewegung der Anpressplatte 26 ist ein als Druckfeder ausgebildetes Rückstellelement 24d zwischen dem Magnetanker 24b und einer Abstützung 24e vorgesehen.

Die Formschlusseinheit 42 der Formschlusskupplung 40 weist ein verlagerbares erstes und als Magnetanker fungierendes Element 44b auf, welches konstruktiv als Zahnscheibe 48 ausgebildet ist und welches ein erstes als Außenverzahnung ausgebildeten Formschlussprofil 48b aufweist. Das Element 44b, 48 ist über einen innenverzahnten Rohrabschnitt 48a drehfest mit der Ausgangswelle 14 verbunden

Des Weiteren ist ein dazu feststehendes zweites, hier als Hohlrad 46 vorliegendes Element mit einem zweiten Formschlussprofil 46d vorgesehen, welches einteilig mit der Eingangswelle 12 ausgebildet ist und axial endseitig über einen außenverzahnten Rohrabschnitt mit einer innenverzahnten Nabe der Ausgangsseite 16b des Torsionsdämpfers 16 in drehfester Verbindung steht. Auf der anderen axialen Endseite ist das Hohlrad 46 fest mit dem Übertragungselement 50 und drehfest mit der Reibscheibe 30 verbunden.

Wie bereits vorstehend erläutert, umfassen die Betätigungsmittel 44 ebenso einen ringförmigen Elektromagnet 44a, der bei dessen Aktivierung den Magnetanker 44b entgegen der Wirkung eines zwischen einer Abstützung 44d und dem Magnetanker 44b eingesetzten Rückstellfeder 44c mit einer Kraft beaufschlagen und diesen axial zu dem Elektromagnet 44a hin verlagern kann. Dabei wird der in Fig. 1 gezeigte Eingriff der Verzahnungsbereiche 46d, 48b aufgehoben und die Formschlusskupplung 40 geöffnet.

Der Eingriff der Formschlussprofile 48b, 46d und die gegenseitige Drehmitnahme der Wellen 12, 14 kann somit bei einer Betätigung durch das zugeordnete Betätigungsmittel 44 aufgehoben werden.

In den Fig. 1 ist erkennbar, dass die Formschlusskupplung 40 und die Reibungskupplung 20 radial gestaffelt zueinander angeordnet sind und sich gegenseitig zumindest teilweise axial überlappen. Insbesondere sind die Reibeinheit 22 und die Formschlusseinheit 42 radial gestaffelt zueinander angeordnet und können sich zumindest teilweise axial überlappen, wobei insbesondere die Formschlusseinheit 42 radial innerhalb der Reibeinheit 22 angeordnet ist. Ebenso sind die beiden Betätigungsmittel 24, 44 von Reibungskupplung 20 und Formschlusskupplung 40 radial gestaffelt zueinander angeordnet und überlappen sich zumindest teilweise axial, wobei insbesondere das Betätigungsmittel 44 der Formschlusskupplung 40 radial innerhalb des Betätigungsmittels 24 der Reibeinheit 22 angeordnet ist.

Die Reibungskupplung 20 und die Formschlusskupplung 40 weisen weiterhin eine gemeinsame Ansteuereinheit 80 zur Ansteuerung der Betätigungsmittel 24, 44 auf, welche an dem Radialwandbereich 64b, insbesondere innerhalb des Aufnahmeraums 68 angeordnet ist.

Es ist ferner erkennbar, dass die Eingangswelle 12 mittels einer Wälzlagers 90b an dem Radialwandbereich 64b und die Ausgangswelle 14 mittels der Wälzlager 90a, 90c zweifach zur Eingangswelle 12 gelagert ist, wobei die Ausgangswelle 14 im eingebauten Zustand der Kupplungsanordnung 10 in einem Fahrzeug zumindest mittelbar mit einer Eingangswelle eines Gangwechselgetriebes verbunden und durch diese gelagert sein.

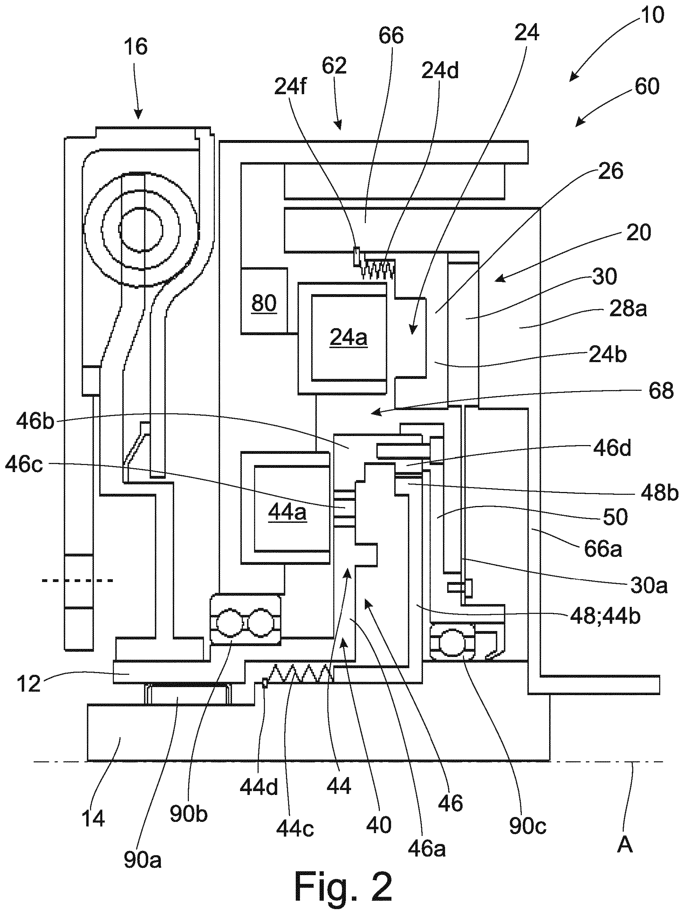

Die Reibungskupplung 20 ist im erläuterten Ausführungsbeispiel gemäß Fig. 1 vom normal-offen Typ und die Formschlusskupplung 40 vom normal-geschlossen Typ. Die weiteren Figuren 2-4 zeigen auf Basis von Fig. 1 und der dazugehörigen Beschreibung abgewandelte Ausführungsbeispiele, wobei lediglich die Unterschiede zum ersten Ausführungsbeispiel erläutert werden.

Gemäß dem mit Fig. 2 dargestellten Ausführungsbeispiel einer Kupplungsanordnung 10 ist die Reibungskupplung 20 gleichfalls wie die Formschlusskupplung 40 vom normal-geschlossen Typ. Dabei ist der Rotorträger 66a als Gegenanpressplatte 28a und der axial verlagerbare Magnetanker 24b als Anpressplatte 26 ausgebildet, welche durch eine zwischen dieser und dem Rotor 66 eingespannten Druckfeder 24f in Richtung der Gegenanpressplatte 28a belastet wird und dabei die Reibscheibe 30 einklemmt. Die Anpressplatte 26 ist am Rotor 66, insbesondere an einem Zylinderabschnitt des Rotorträgers 66a axial verdrehsicher verlagerbar angeordnet. Eine Anordnung von Bolzen 24c wie in Fig. 1 ist nicht erforderlich. Der Reibschluss kann durch eine Aktivierung des Betätigungsmittels 24, insbesondere des Ringmagnet 24a aufgehoben werden, indem die Anpressplatte 26 entgegen der Wirkung der Druckfeder verlagert wird.

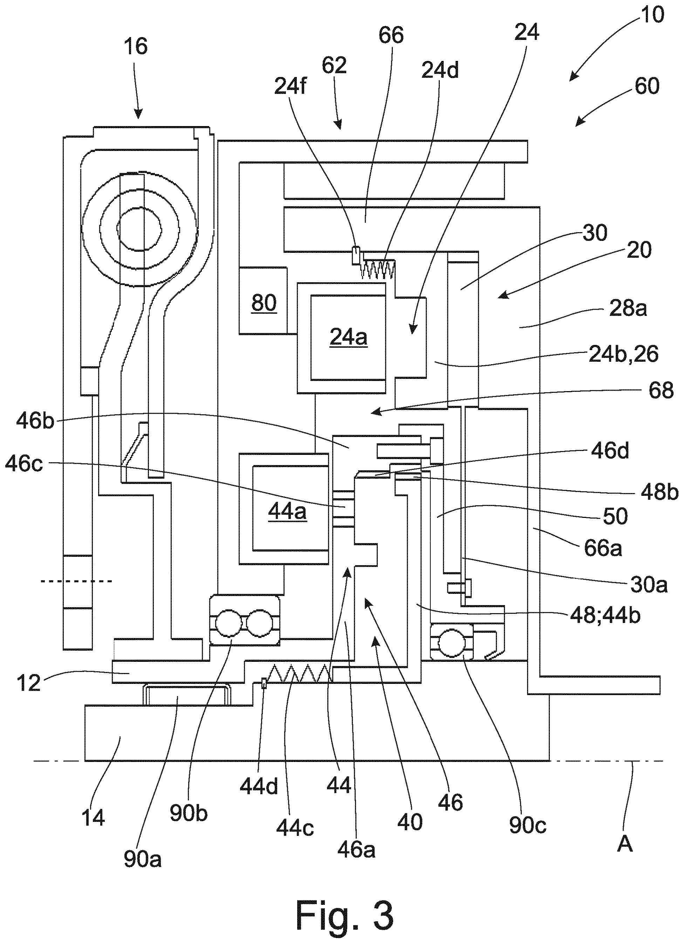

Bei der mit Fig. 3 dargestellten Kupplungsanordnung 10 ist die Reibungskupplung 40 ebenso wie zuvor beschrieben vom normal-geschlossen Typ. Hinsichtlich deren Aufbau und Funktion wird auf die Beschreibung zu Fig. 2 verwiesen. Die Formschlusskupplung 40 ist dabei vom normal-offen Typ, wobei die Betätigungsmittel 44, insbesondere der Elektromagnet 44a, der Magnetanker 44b bzw. die Zahnscheibe 48 und das Rückstellelement 44c identisch zu Fig. 1 verwirklicht sind. Diesbezüglich wird auf die zugehörige Beschreibung zu Fig. 1 verwiesen. Lediglich der Verzahnungsbereich 46d des Hohlrades wurde an dem radial äußeren Bereich 46b an einer axial zum Elektromagnet 44a näheren Position ausgebildet, so dass sich dieser in der in Fig. 3 gezeigten Ruhestellung der Betätigungsmittel 44 nicht mit dem Verzahnungsbereich 48b des Magnetankers 48 in Eingriff befindet. Erst durch eine Aktivierung des Elektromagnet 44a wird der Magnetanker 48 axial verlagert und kann dabei in formschlüssige Drehmitnahme zum Hohlrad 46 gebracht werden.

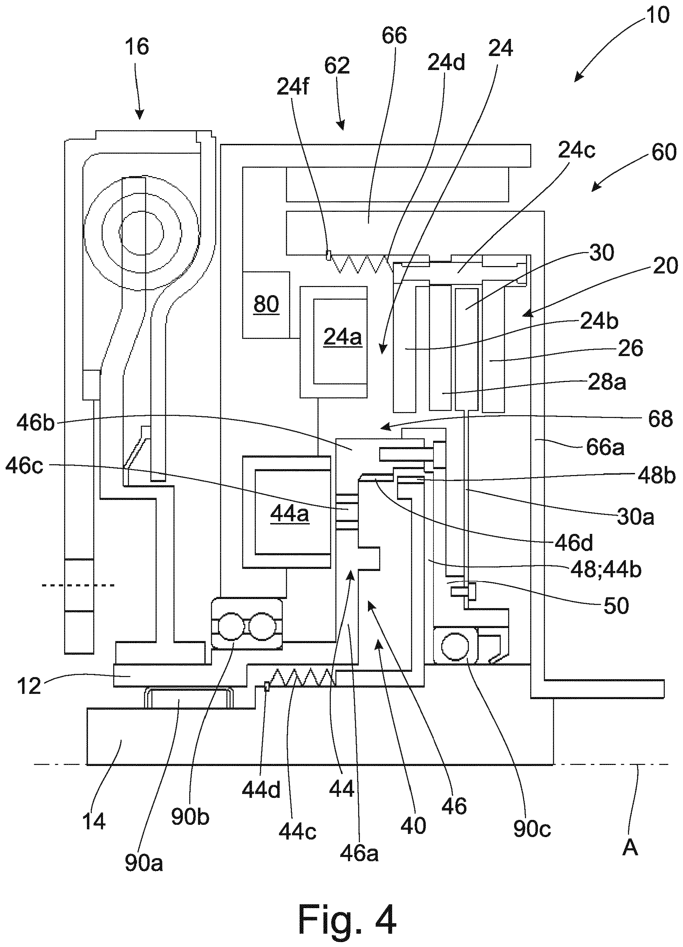

Fig. 4 zeigt ein weiteres Ausführungsbeispiel einer Kupplungsanordnung 10, wobei sowohl die Reibungskupplung 20 als auch die Formschlusskupplung 40 vom normal-offen Typ sind. Hinsichtlich dem Aufbau und der Funktion der Reibungskupplung 20 wird auf die Erläuterungen zu Fig. 1 und hinsichtlich dem Aufbau und der Funktion der Formschlusskupplung 40 wird auf die Erläuterungen zu Fig. 3 verwiesen.

Unabhängig von der jeweiligen konkreten Ausführungsform werden bei der erläuterten Kupplungsanordnung 10 zum Starten eines mit der Eingangswelle 12 gekoppelten Verbrennungsmotors eines Hybridfahrzeuges bei elektromotorischen Fahrbetrieb zunächst, sofern diese nicht bereits durch die Ausführung der Kupplungen 20, 40 selbst gegeben ist, beide Kupplungen 20, 40 geöffnet. Im Weiteren wird zuerst die Reibungskupplung 20 geschlossen und dabei der Verbrennungsmotor unter Hochschleppen dessen Kurbelwelle angeworfen, um dabei oder danach die Formschlusskupplung 20 zu schließen. Dabei kann zum Erreichen einer Eingriffsstellung der Elemente 46, 48 der Formschlusskupplung 40 das Betätigungsmittel 24 der Reibungskupplung 20 kurzzeitig deaktiviert oder gegenüber einem vollständigen Aktivierung weniger aktiviert werden, so dass in dieser Betätigungsphase der Reibschluss zumindest kurzzeitig aufgehoben oder zumindest reduziert wird und einen Schlupf erfährt, bis eine Eingriffsstellung der Elemente 46, 48 erreicht ist und die Formschlusskupplung 40 problemlos geschlossen werden. Danach kann die Reibungskupplung 20 unter Aufhebung des Reibschlusses deaktiviert werden, was jedoch nicht zwangsweise erfolgen muss. Das heißt, dass der Reibschluss auch bei geschlossener Formschlusskupplung 20 aufrechterhalten werden kann. Zu diesem Zweck ist eine separate Ausführung der Betätigungsmittel 24, 44 der Kupplungen 20, 40 äußerst vorteilhaft.

### Bezugszeichen

- 10: Kupplungsanordnung
- 12: Eingangswelle
- 14: Ausgangswelle
- 16: Torsionsdämpfer
- 16a: Eingangsseite
- 16b: Ausgangsseite
- 16c: Energiespeicher
- 20: Reibungskupplung
- 22: Reibeinheit
- 24,44: Betätigungsmittel
- 24a: Elektromagnet
- 24b: Magnetanker
- 24c: Zugbolzen
- 24d: Rückstellelement
- 24e: Abstützung
- 24f: Druckfeder
- 26: Anpressplatte
- 28: Widerlageranordnung
- 28a: Gegenanpressplatte
- 30: Reibscheibe
- 30a: Trägerbereich
- 40: Formschlusskupplung
- 42: Formschlusseinheit
- 44a: Elektromagnet
- 44b: Magnetanker
- 44c: Rückstellelement
- 44d: Anschlag
- 46: Hohlrad
- 46a: radial innerer Bereich
- 46b: radial äußerer Bereich
- 46c: Trennbereich
- 46d: Verzahnungsbereich
- 48: Zahnscheibe
- 48a: Rohrabschnitt
- 48b: Verzahnungsbereich
- 50: Übertragungselement
- 60: elektrische Maschine
- 62: Stator
- 64: Statorträger
- 64a: Zylinderwandbereich
- 64b: Radialwandbereich
- 66: Rotor
- 66a: Rotorträger
- 68: Aufnahmeraum
- 80: Ansteuereinheit
- 90a-c: Lager
- A: Drehachse

## Patentansprüche

1. Kupplungsanordnung (10) für ein Hybridfahrzeug, umfassend
- eine Eingangswelle (12) und eine dazu koaxial angeordnete Ausgangswelle (14),
- eine Reibungskupplung (20) und eine Formschlusskupplung (40), welche funktional parallel zwischen der Eingangswelle (12) und der Ausgangswelle (14) angeordnet sind, wobei
- die Reibungskupplung (20) eine Reibeinheit (22) und die Formschlusskupplung (40) eine Formschlusseinheit (42) aufweisen, welche durch Betätigungsmittel (24, 44) betätigbar sind, wobei
- die Formschlusskupplung (40) und die Reibungskupplung (20) jeweils eigene Betätigungsmittel (24, 44) aufweisen und unabhängig voneinander betätigbar sind,
**dadurch gekennzeichnet, dass**
- eine elektrische Maschine (60) mit einem Rotor (66) und mit einem Stator (62) vorgesehen ist, wobei der Rotor (66) mit der Ausgangswelle (14) in Drehmitnahmeverbindung steht und wobei die elektrische Maschine (60) einen zentralen Aufnahmeraum (68) aufweist, in welchem die Reibungskupplung (20) und die Formschlusskupplung (40) vollständig oder zumindest teilweise aufgenommen sind.

2. Kupplungsanordnung nach Anspruch 1, **dadurch gekennzeichnet, dass** zumindest eines der Betätigungsmittel (24, 44) oder beide Betätigungsmittel (24, 44) zur elektromagnetischen Betätigung einer der Kupplungen (20, 40) ausgebildet sind.

3. Kupplungsanordnung nach einem Anspruch 1 oder 2, **dadurch gekennzeichnet, dass** die Reibeinheit (22) eine axial verlagerbare Anpressplatte (26), eine Widerlageranordnung (28) mit einer Gegenanpressplatte (28a) und eine zwischen diesen angeordnete Reibscheibe (30) aufweist, wobei die Anpressplatte (26) und die Gegenanpressplatte (28a) mit der Eingangswelle (12) oder der Ausgangswelle (14) und wobei die Reibscheibe (30) mit der jeweils anderen von Eingangswelle (12) und Ausgangswelle (14) in Drehmitnahmeverbindung steht.

4. Kupplungsanordnung nach einem der Ansprüche 1-3, **dadurch gekennzeichnet, dass** die Formschlusseinheit (42) ein verlagerbares erstes Element (44b, 48) mit einem ersten Formschlussprofil (48b) und ein dazu feststehendes zweites Element (46) mit einem zweiten Formschlussprofil (46d) aufweist, wobei das erste Element (44b, 48) mit der Eingangswelle (12) oder der Ausgangswelle (14) und das zweite Element (46) mit der jeweils anderen von Eingangswelle (12) und Ausgangswelle (14) in Drehmitnahmeverbindung steht und wobei die Formschlussprofile (48b, 46d) durch das zugeordnete Betätigungsmittel (44) bei einer Betätigung zur gemeinsamen Drehmitnahme gegenseitig in Eingriff bringbar sind (normal-offen) oder welche durch das zugeordnete Betätigungsmittel bei einer Betätigung zur Aufhebung einer gegenseitigen Drehmitnahme gegenseitig außer Eingriff bringbar sind (normal-geschlossen).

5. Kupplungsanordnung nach einem der Ansprüche 1-4, **dadurch gekennzeichnet, dass** die Formschlusskupplung (40) und die Reibungskupplung (20) radial gestaffelt zueinander angeordnet sind und sich gegenseitig zumindest teilweise axial überlappen.

6. Kupplungsanordnung nach Anspruch 5, **dadurch gekennzeichnet, dass** die Reibeinheit (22) und die Formschlusseinheit (42) radial gestaffelt zueinander angeordnet sind und sich zumindest teilweise axial überlappen, wobei insbesondere die Formschlusseinheit (42) radial innerhalb der Reibeinheit (22) angeordnet ist.

7. Kupplungsanordnung nach Anspruch 5 oder 6, **dadurch gekennzeichnet, dass** die beiden Betätigungsmittel (24, 44) von Reibungskupplung (20) und Formschlusskupplung (40) radial gestaffelt zueinander angeordnet sind und sich zumindest teilweise axial überlappen, wobei insbesondere das Betätigungsmittel (44) der Formschlusskupplung (40) radial innerhalb des Betätigungsmittels (24) der Reibeinheit (22) angeordnet ist.

8. Kupplungsanordnung nach einem der Ansprüche 3-7, **dadurch gekennzeichnet, dass** die Widerlageranordnung (28) der Reibungskupplung (20) am Rotor (66) ausgebildet ist.

9. Kupplungsanordnung nach einem der Ansprüche 1-8, **dadurch gekennzeichnet, dass** der Stator (62) einen Statorträger (64) mit einem den Aufnahmeraum (68) begrenzenden Radialwandbereich (64b) umfasst oder benachbart zu einem Radialwandbereich (64b) einer weiteren Komponente angeordnet ist, an welchem die Betätigungsmittel (24, 44) der Reibungskupplung (20) und der Formschlusskupplung (40) festgelegt sind.

10. Kupplungsanordnung nach Anspruch 9, **dadurch gekennzeichnet, dass** der Rotor (66) einen sich radial erstreckenden Rotorträger (66a) aufweist, wobei der Aufnahmeraum (68) axial zwischen dem Radialwandbereich (64b) und dem Rotorträger (68a) ausgebildet ist.

11. Kupplungsanordnung nach einem der Ansprüche 1-10, **dadurch gekennzeichnet, dass** die Reibungskupplung (20) und die Formschlusskupplung (40) eine gemeinsame Ansteuereinheit (80) zur Ansteuerung der Betätigungsmittel (24, 44) aufweisen.

12. Kupplungsanordnung nach Anspruch 11, **dadurch gekennzeichnet, dass** die Ansteuereinheit (80) an dem Radialwandbereich (64b), insbesondere innerhalb des Aufnahmeraums (68) angeordnet ist.

13. Kupplungsanordnung nach einem der Ansprüche 9-12, **dadurch gekennzeichnet, dass** die Eingangswelle (12) an dem Radialwandbereich (64b) und die Ausgangswelle (14) zweifach zur Eingangswelle (12) gelagert ist.

14. Kupplungsanordnung nach einem der Ansprüche 1-13, **dadurch gekennzeichnet**, die elektrische Maschine (60) ist als Innenläufer ausgebildet ist, wobei der Rotor (66) radial innerhalb des Stators (62) angeordnet ist.

## Claims

1. Clutch arrangement (10) for a hybrid vehicle, comprising
- an input shaft (12) and an output shaft (14) which is arranged coaxially with respect to the former,
- a friction clutch (20) and a positively locking clutch (40) which are arranged functionally in parallel between the input shaft (12) and the output shaft (14),
- the friction clutch (20) having a friction unit (22), and the positively locking clutch (40) having a positively locking unit (42), which friction unit (22) and positively locking unit (42) can be actuated by way of actuating means (24, 44),
- the positively locking clutch (40) and the friction clutch (20) in each case having dedicated actuating means (24, 44) and being actuable independently of one another,
**characterized in that**
- an electric machine (60) with a rotor (66) and with a stator (62) is provided, the rotor (66) being in a rotary drive connection with the output shaft (14), and the electric machine (60) having a central receiving space (68), in which the friction clutch (20) and the positively locking clutch (40) are received completely or at least partially.

2. Clutch arrangement according to Claim 1, **characterized in that** at least one of the actuating means (24, 44) or the two actuating means (24, 44) are configured for the electromagnetic actuation of one of the clutches (20, 40) .

3. Clutch arrangement according to either of Claims 1 and 2, **characterized in that** the friction unit (22) has an axially movable pressure plate (26), an abutment arrangement (28) with a counter-pressure plate (28a) and a friction disc (30) which is arranged between them, the pressure plate (26) and the counter-pressure plate (28a) being in a rotary drive connection with the input shaft (12) or the output shaft (14), and the friction disc (30) being in a rotary drive connection with the respective other one of the input shaft (12) and the output shaft (14) .

4. Clutch arrangement according to one of Claims 1 to 3, **characterized in that** the positively locking unit (42) has a movable first element (44b, 48) with a first positively locking profile (48b), and a second element (46) which is stationary with respect to the former with a second positively locking profile (46d), the first element (44b, 48) being in a rotary drive connection with the input shaft (12) or the output shaft (14), and the second element (46) being in a rotary drive connection with the respective other one of the input shaft (12) and the output shaft (14), and it being possible for the positively locking profiles (48b, 46d) to be brought mutually into engagement (normally open) by way of the associated actuating means (44) in the case of an actuation for common rotary driving, or which can be brought mutually out of engagement (normally closed) by way of the associated actuating means in the case of an actuation for cancelling mutual rotary driving.

5. Clutch arrangement according to one of Claims 1 to 4, **characterized in that** the positively locking clutch (40) and the friction clutch (20) are arranged in a radially staggered manner with respect to one another, and axially overlap mutually at least partially.

6. Clutch arrangement according to Claim 5, **characterized in that** the friction unit (22) and the positively locking unit (42) are arranged in a radially staggered manner with respect to one another, and axially overlap at least partially, the positively locking unit (42) being arranged, in particular, radially within the friction unit (22).

7. Clutch arrangement according to Claim 5 or 6, **characterized in that** the two actuating means (24, 44) of the friction clutch (20) and the positively locking clutch (40) are arranged in a radially staggered manner with respect to one another, and axially overlap at least partially, the actuating means (44) of the positively locking clutch (40) being arranged, in particular, radially within the actuating means (24) of the friction unit (22).

8. Clutch arrangement according to one of Claims 3 to 7, **characterized in that** the abutment arrangement (28) of the friction clutch (20) is configured on the rotor (66) .

9. Clutch arrangement according to one of Claims 1 to 8, **characterized in that** the stator (62) comprises a stator carrier (64) with a radial wall region (64b) which delimits the receiving space (68), or is arranged adjacently with respect to a radial wall region (64b) of a further component, on which radial wall region (64b) the actuating means (24, 44) of the friction clutch (20) and the positively locking clutch (40) are fixed.

10. Clutch arrangement according to Claim 9, **characterized in that** the rotor (66) has a radially extending rotor carrier (66a), the receiving space (68) being configured axially between the radial wall region (64b) and the rotor carrier (68a).

11. Clutch arrangement according to one of Claims 1 to 10, **characterized in that** the friction clutch (20) and the positively locking clutch (40) have a common triggering unit (80) for triggering the actuating means (24, 44) .

12. Clutch arrangement according to Claim 11, **characterized in that** the triggering unit (80) is arranged on the radial wall region (64b), in particular within the receiving space (68).

13. Clutch arrangement according to one of Claims 9 to 12, **characterized in that** the input shaft (12) is mounted on the radial wall region (64b), and the output shaft (14) is mounted twice with respect to the input shaft (12) .

14. Clutch arrangement according to one of Claims 1 to 13, **characterized in that** the electric machine (60) is configured as an internal rotor, the rotor (66) being arranged radially within the stator (62).

## Revendications

1. Ensemble d'embrayage (10) pour un véhicule hybride, comprenant
- un arbre d'entrée (12) et un arbre de sortie (14) disposé coaxialement à celui-ci,
- un embrayage à friction (20) et un embrayage à engagement positif (40) qui sont disposés fonctionnellement en parallèle entre l'arbre d'entrée (12) et l'arbre de sortie (14), dans lequel
- l'embrayage à friction (20) présente une unité à friction (22) et l'embrayage à engagement positif (40) présente une unité à engagement positif (42), lesquelles peuvent être actionnées par des moyens d'actionnement associés (24, 44), dans lequel
- l'embrayage à engagement positif (40) et l'embrayage à friction (20) présentent respectivement leurs propres moyens d'actionnement (24, 44) et peuvent être actionnés indépendamment l'un de l'autre,
**caractérisé en ce que**
- une machine électrique (60) dotée d'un rotor (66) et d'un stator (62) est prévue, le rotor (66) étant solidaire en rotation avec l'arbre de sortie (14), et la machine électrique (60) présentant un espace de réception central (68) dans lequel l'embrayage à friction (20) et l'embrayage à engagement positif (40) sont reçus entièrement ou du moins partiellement.

2. Ensemble d'embrayage selon la revendication 1, **caractérisé en ce qu'**au moins l'un des moyens d'actionnement (24, 44) ou les deux moyens d'actionnement (24, 44) sont réalisés pour l'actionnement électromagnétique d'un des embrayages (20, 40) .

3. Ensemble d'embrayage selon l'une quelconque des revendications 1 et 2, **caractérisé en ce que** l'unité à friction (22) présente un plateau de pression (26) déplaçable axialement, un ensemble de butée (28) muni d'un plateau de réaction (28a) et un disque de friction (30) disposé entre ceux-ci, dans lequel le plateau de pression (26) et le plateau de réaction (28a) sont en liaison d'entraînement en rotation avec l'arbre d'entrée (12) ou l'arbre de sortie (14), et dans lequel le disque à friction (30) est en liaison d'entraînement en rotation avec l'autre arbre respectif de l'arbre d'entrée (12) et de l'arbre de sortie (14).

4. Ensemble d'embrayage selon l'une quelconque des revendications 1 à 3, **caractérisé en ce que** l'unité à engagement positif (42) présente un premier élément déplaçable (44b, 48) doté d'un premier profilé à engagement positif (48b) et un deuxième élément (46) fixe par rapport à celui-ci et doté d'un deuxième profilé à engagement positif (46d), le premier élément (44b, 48) étant en liaison d'entraînement en rotation avec l'arbre d'entrée (12) ou l'arbre de sortie (14), et le deuxième élément (46) étant en liaison d'entraînement en rotation avec l'autre arbre respectif de l'arbre d'entrée (12) et de l'arbre de sortie (14), et dans lequel les profilés à engagement positif (48b, 46d) peuvent être mis en prise mutuellement (normalement ouverts) par le moyen d'actionnement associé (44) lors d'un actionnement pour un entraînement en rotation commun, ou peuvent être mis hors prise mutuellement (normalement fermés) par le moyen d'actionnement associé lors d'un actionnement pour annuler un entraînement en rotation mutuel.

5. Ensemble d'embrayage selon l'une quelconque des revendications 1 à 4, **caractérisé en ce que** l'embrayage à engagement positif (40) et l'embrayage à friction (20) sont disposés l'un par rapport à l'autre de manière radialement échelonnée et se recouvrent l'un l'autre axialement au moins en partie.

6. Ensemble d'embrayage selon la revendication 5, **caractérisé en ce que** l'unité à friction (22) et l'unité à engagement positif (42) sont disposées l'une par rapport à l'autre de manière radialement échelonnée et se recouvrent l'une l'autre axialement au moins en partie, l'unité à engagement positif (42) étant en particulier disposée radialement à l'intérieur de l'unité à friction (22).

7. Ensemble d'embrayage selon la revendication 5 ou 6, **caractérisé en ce que** les deux moyens d'actionnement (24, 44) de l'embrayage à friction (20) et de l'embrayage à engagement positif (40) sont disposés l'un par rapport à l'autre de manière radialement échelonnée et se recouvrent l'un l'autre axialement au moins en partie, le moyen d'actionnement (44) de l'embrayage à engagement positif (40) étant en particulier disposé radialement à l'intérieur du moyen d'actionnement (24) de l'unité à friction (22).

8. Ensemble d'embrayage selon l'une quelconque des revendications 3 à 7, **caractérisé en ce que** l'ensemble de butée (28) de l'embrayage à friction (20) est réalisé sur le rotor (66).

9. Ensemble d'embrayage selon l'une quelconque des revendications 1 à 8, **caractérisé en ce que** le stator (62) comprend un support de stator (64) avec une zone de paroi radiale (64b) délimitant l'espace de réception (68) ou est disposé à côté d'une zone de paroi radiale (64b) d'un composant supplémentaire, sur laquelle sont fixés les moyens d'actionnement (24, 44) de l'embrayage à friction (20) et de l'embrayage à engagement positif (40) .

10. Ensemble d'embrayage selon la revendication 9, **caractérisé en ce que** le rotor (66) présente un support de rotor (66a) s'étendant radialement, l'espace de réception (68) étant réalisé axialement entre la zone de paroi radiale (64b) et le support de rotor (68a).

11. Ensemble d'embrayage selon l'une quelconque des revendications 1 à 10, **caractérisé en ce que** l'embrayage à friction (20) et l'embrayage à engagement positif (40) présentent une unité de pilotage (80) commune pour piloter les moyens d'actionnement (24, 44) .

12. Ensemble d'embrayage selon la revendication 11, **caractérisé en ce que** l'unité de pilotage (80) est disposée sur la zone de paroi radiale (64b), en particulier à l'intérieur de l'espace de réception (68) .

13. Ensemble d'embrayage selon l'une quelconque des revendications 9 à 12, **caractérisé en ce que** l'arbre d'entrée (12) est monté au niveau de la zone de paroi radiale (64b) et l'arbre de sortie (14) est monté doublement par rapport à l'arbre d'entrée (12).

14. Ensemble d'embrayage selon l'une quelconque des revendications 1 à 13, **caractérisé en ce que** la machine électrique (60) est réalisée sous la forme d'un rotor intérieur, le rotor (66) étant disposé radialement à l'intérieur du stator (62).
